# EUROPEAN PATENT SPECIFICATION

(11) **EP 4 535 725 B1**
(45) Date of publication and mention of the grant of the patent: **28.10.2026**
(21) Application number: 23822933.0
(22) Date of filing: 31.05.2023
(51) Int. Cl.: H04L 9/40, G06F 21/64, H04L 9/14, H04L 9/32, H04L 69/22, H04W 12/67, H04W 12/106

(54) **COMMUNICATION PROTECTION METHOD AND SYSTEM, ELECTRONIC DEVICE, AND STORAGE MEDIUM**
KOMMUNIKATIONSSCHUTZVERFAHREN UND -SYSTEM, ELEKTRONISCHE VORRICHTUNG UND SPEICHERMEDIUM
PROCÉDÉ ET SYSTÈME DE PROTECTION DE COMMUNICATION, DISPOSITIF ÉLECTRONIQUE ET SUPPORT D'ENREGISTREMENT

(30) Priority: 17.06.2022 CN 202210692194
(43) Date of publication of application: 09.04.2025
(73) Proprietor: ZTE Corporation, Shenzhen, Guangdong 518057 (CN)
(72) Inventor: YAN, Xincheng, Shenzhen, Guangdong 518057 (CN); ZHOU, Na, Shenzhen, Guangdong 518057 (CN); JIANG, Zhihong, Shenzhen, Guangdong 518057 (CN); SONG, Lin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/097581
(87) International publication number: WO 2023/241363

(56) References cited:
- WO-A1-2017/186069
- CN-A- 101 699 873
- CN-A- 113 873 041
- US-A- 5 692 124
- US-A1- 2008 016 227
- US-A1- 2019 074 979
- US-A1- 2020 342 459
- US-A1- 2021 099 464

## Description

### TECHNICAL FIELD

The present application relates to the technical field of communication, and in particular to a communication protection method and a system, an electronic device, and a storage medium.

### BACKGROUND

With the continuous progress of society and the continuous development of the economy, the network has become an indispensable part of people's daily life. With the evolution of network cloudification/generalization, the integration of 2B and 2C services, the increasing exposure of network openness, the further blurring of the "boundaries" of network security, and the continuous upgrading of attack methods, the conventional "patch-style" security design model has defects such as structural rigidity, late awareness, and lack of coordination. The stacked and reinforced security architecture relies on a passive protection mode based on prior knowledge, which is difficult to meet the new network security protection needs. Therefore, it is necessary to break through the conventional design model, add higher security factors into the network, and conduct system security design from the requirements of identity, data, network, and communication terminals. Network communication protection is based on the verification of access terminals and the protection of receiving terminals to ensure the security and reliability of the network, and provide security guarantees for the normal operation of resources and normal communication of services.

US2019/074979A1 discloses methods, systems, and devices for authenticating API messages using PKI-based authentication techniques. A client system can generate a private/public key pair associated with the client system and sign an API message using the private key of the private/public key pair and a PKI-based cryptographic algorithm, before sending the signed API message to a server system. The server system (e.g., operated by a service provider) can authenticate the incoming signed API message using a proxy authenticator located in less trusted zone (e.g., a perimeter network) of the server system. In particular, the proxy authenticator can be configured to verify the signature of the signed API message using the public key corresponding to the private key and the same cryptographic algorithm. The authenticated API message can then be forwarded to a more trusted zone (e.g., an internal network) of the server system for further processing.

US2008/016227A1 discloses a multi-level network security system for a computer host device coupled to at least one computer network. The system includes a secure network interface Unit (SNIU) contained within a communications stack of the computer device that operates at a user layer communications protocol. The SNIU communicates with other like SNIU devices on the network by establishing an association, thereby creating a global security perimeter for end-to-end communications and wherein the network may be individually secure or non-secure without compromising security of communications within the global security perimeter. The SNIU includes a host/network interface for receiving messages sent between the computer device and network. The interface operative to convert the received messages to and from a format utilized by the network. A message parser for determining whether the association already exists with another SNIU device. A session manager coupled to said network interface for identifying and verifying the computer device requesting access to said network. The session manager also for transmitting messages received from the computer device when the message parser determines the association already exists. An association manager coupled to the host/network interface for establishing an association with other like SNIU devices when the message parser determines the association does not exist.

US2020/342459A1 discloses the trusted customer identity systems and methods, to provide secure electronic payment transactions that incorporate a customer identity verification using cross-referenced multiple data sources. It employs two distinct authorities to provide payment speed, simplicity, and security, and incorporates a network path-based identity methodology that does not require a shared piece of information between two parties. A first party receives a secure token to which it has sole access and controls possession of unique data that they append to the token. Prior to a transaction, a unique identifying characteristic of the party is used to register it as a member of the trusted customer network. The other parties on the network do not possess a copy of the unique data but, based on the registration characteristics of the first party, they know when they receive the token that only the first party could have added the unique data to the digital token. The other parties on the network can trust that the first party is the same party who registered this account to the network.

US5692124A discloses a method for limited write downs of data from higher security classification users to lower security classification users across computer networks, while preserving the security of classified data at the higher security classification user from covert transmission via acknowledgment messages from the higher user to the lower user. The intended acknowledgment message is released to the lower user when it matches the user content of a predicted acknowledgment message. In TCP/IP interface applications, the acknowledgment messages are IP based data transfer protocols acknowledging the transfer of data from the lower side to the higher side. With IP datagram transfers, deterministic portions are predicted and non-deterministic portions are identified. Where the number of non-deterministic bits exceed a predetermined rate, the acknowledgment message is discarded.

However, conventional communication protection technologies have defects, such as low protection efficiency, insufficient system protection, and insufficient comprehensive protection.

### SUMMARY

The purpose of the present application is to solve the above problems, provide a communication protection method, a system, an electronic device and a storage medium, aiming to solve the problems of low protection efficiency, poor defense system and insufficient protection in the business intercommunication process, and achieve the purpose of comprehensive and efficient protection of the communication intercommunication process.

To solve the above problems, embodiments of the present application provide a communication protection method, applied to a communication protection system comprising a communication initiating terminal, a communication receiving terminal, a first transmission node and a second transmission node. The communication protection method includes: determining a type of a data message to be sent, the type of the data message including a first data message and a second data message; the first data message being a primary data message sent to a communication receiving terminal, and the second data message being a non-primary data message sent to the communication receiving terminal; in response to that the data message is the first data message, performing strong verification on the data message; in response to that the data message is the second data message, performing weak verification on the data message, the strong verification being a verification with security higher than the weak verification; and in response to that verification passes, transmitting the data message to the communication receiving terminal. The determining the type of the data message includes: in response to that the data message carries an Internet Protocol, IP, of the communication receiving terminal appearing for a first time, determining the data message as the first data message; in response to that the data message carries the IP of the communication receiving terminal not appearing for a first time, determining the data message as the second data message.

To solve the above problems, embodiments of the present application provide a communication protection system including: a communication initiating terminal, a communication receiving terminal, a first transmission node and at least one second transmission node. The first transmission node is configured to execute the communication protection method as mentioned above. The second transmission node and the communication receiving terminal are configured to execute the communication protection method as mentioned above.

To solve the above problems, embodiments of the present application provide an electronic device including at least one processor and a memory communicating with the at least one processor. The memory stores an instruction executable by the at least one processor, and the instruction is executed by the at least one processor to make the at least one processor execute the communication protection method as mentioned above.

To solve the above problems, embodiments of the present application provide a computer-readable storage medium storing a computer program. When the computer program is executed by a processor, the communication protection method as mentioned above is implemented.

For the communication protection method in the embodiments of the present application, strong verification is performed on the primary data message sent to the communication receiving terminal, and only if the strong verification passes, the data message is forwarded to the communication receiving terminal, so as to achieve security verification while establishing communication with the communication receiving terminal, thereby avoiding the communication receiving terminal from being attacked and ensuring the security and reliability of the network. In addition, weak verification is performed on the non-primary data message of the communication receiving terminal, so that even if the communication receiving terminal has been connected, weak verification still needs to be performed on the data message, thereby avoiding the potential risks brought by the data message. Therefore, the problems of low protection efficiency, poor defense system and insufficient protection of the service intercommunication process are solved, and the purpose of comprehensive and efficient protection of the communication intercommunication process is achieved.

### BRIEF DESCRIPTION OF THE DRAWINGS

One or more embodiments are exemplified by the figures in the corresponding drawings, and these illustrative descriptions do not constitute a limitation to the embodiments. Elements with same reference numbers in the drawings represent similar elements, and unless otherwise stated, the figures in the drawings do not constitute proportional limitations.
FIG. 1 is a flowchart of a communication protection method according to an embodiment of the present application.
FIG. 2 is a flowchart showing performing communication protection on a first data message according to an embodiment of the present application.
FIG. 3 is a flowchart showing performing communication protection on a second data message according to an embodiment of the present application.
FIG. 4 is a flowchart showing performing communication protection on a first data message according to another embodiment of the present application.
FIG. 5 is a flowchart showing performing communication protection on a second data message according to another embodiment of the present application.
FIG. 6 is a schematic structural diagram of a communication protection system according to an embodiment of the present application.
FIG. 7 is a schematic structural diagram of a communication protection system according to another embodiment of the present application.
FIG. 8 is a schematic structural diagram of an electronic device according to an embodiment of the present application.

### DETAILED DESCRIPTION OF THE EMBODIMENTS

In order to make the purpose, technical solutions and advantages of the present application clearer, embodiments of the present application will be clearly described below in conjunction with the drawings of the present application. However, those skilled in the art can understand that, in the various embodiments of the present application, many technical details are provided in order to enable the reader to better understand the present application. Even without these technical details and various changes and modifications based on following embodiments, the technical solutions in the present application can still be implemented.

An embodiment of the present application relates to a communication protection method which includes: determining the type of a data message to be sent, the type of the data message including a first data message and a second data message, the first data message being the primary data message sent to the communication receiving terminal, and the second data message being the non-primary data message sent to the communication receiving terminal; in response to that the data message is the first data message, performing strong verification on the data message; in response to that the data message is the second data message, performing weak verification on the data message, strong verification being verification with higher security than the weak verification; and in response to that verification passes, transmitting the data message to the communication receiving terminal. The communication protection method can solve the problems of low protection efficiency, poor defense system and insufficient protection in the service interworking process, and achieve the purpose of comprehensive and efficient protection of the communication interworking process.

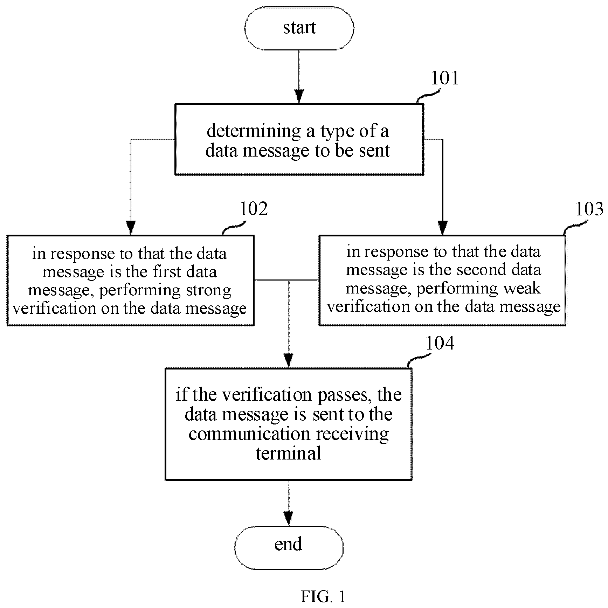

The implementation details of the method in this embodiment are described in detail below. The following contents are only for the convenience of understanding the implementation details of technical solutions, and is not necessary for implementing these technical solutions. The specific process is shown in FIG. 1, which may include the following steps.

Step 101, determining a type of a data message to be sent.

The type of the data message includes a first data message and a second data message. The first data message is a primary data message sent to a communication receiving terminal, and the second data message is a non-primary data message sent to the communication receiving terminal. There can be one or more data messages. The data message can be a set of streams with the same information or multiple combinations of the same information, which includes the Internet Protocol (IP) of the communication initiating terminal, the identity of the communication initiating terminal, the port of the communication initiating terminal, the IP of the communication receiving terminal, the identity of the communication receiving terminal, the port of the communication receiving terminal, the protocol number, and the protocol port. The first data message may be an initial data message or a primary packet, and further may be a data message after the primary packet when the data message has poor security. For the second data message, when the data message has high security, the second data message may further be the primary data message.

In an embodiment of the present application, when the data message carries the IP of the communication receiving terminal appearing for a first time, the data message is determined as the first data message. When the data message carries the IP of the communication receiving terminal not appearing for a first time, the data message is determined as the second data message.

In an embodiment, when the data message to be sent carries the IP of the communication receiving terminal A and the communication initiating terminal has never transmitted a data message to the communication receiving terminal A, the data message is determined as the first data message. When the communication initiating terminal has transmitted a data message to the communication receiving terminal A, the data message is determined as the second data message.

In another embodiment, the data message to be sent carries the IP of the communication receiving terminal A and the IP of the communication initiating terminal B. When the communication initiating terminal B has never transmitted a data message to the communication receiving terminal A, the data message is determined as the first data message. When the communication initiating terminal B has transmitted a data message to the communication receiving terminal A, the data message is determined as the second data message.

The communication initiating terminal and the communication receiving terminal can be a terminal, a personal computer (PC), a server, a manager, a controller, and the like.

In an embodiment, for a data message that is not transmitted to the communication receiving terminal for the first time, if it is detected that the data message has poor security, the data message can still be determined as the first data message and strong verification is performed on it. For a data message that is transmitted to the communication receiving terminal for the first time, if it is detected that the data message has high security, the data message can be determined as the second data message and weak verification is performed on it.

Step 102, in response to that the data message is the first data message, performing strong verification on the data message.

In an embodiment, for the communication initiating terminal and the communication terminal that perform data transmission for the first time, it is necessary to adopt a strong verification with high security to verify the data message transmitted by the communication initiating terminal.

In an embodiment of the present application, the step of performing strong verification on the data message includes: the first transmission node or the communication initiating terminal performs cryptography calculation on the data message and generates a first verification value, and adds first verification information to the data message. The first transmission node is a transmission node that receives the data message sent from the communication initiating terminal, and the first transmission node can be a router, a switch, a gateway, and the like.

In the embodiment of the present application, when the first transmission node performs the above-mentioned strong verification step, the first transmission node uses the key of the first transmission node to perform cryptography calculation on the information of the communication initiating terminal and/or the first transmission node, and generates a first verification value. Or the first transmission node uses the key of the communication initiating terminal to perform cryptography calculation on the information of the communication initiating terminal and/or the first transmission node, and generates a first verification value.

In an embodiment, the first transmission node receives a data message from the communication initiating terminal. The data message carries the information of the communication initiating terminal, and the key of the communication initiating terminal can be obtained from the key management center through the information of the communication initiating terminal. Therefore, the first transmission node can use the key of the first transmission node or the key of the communication initiating terminal to perform cryptography calculation or signature on information (such as identity or address) of the first transmission node or the communication initiating terminal to obtain a first verification value.

In the embodiment of the present application, when the communication initiating terminal performs the above-mentioned strong verification step, the communication initiating terminal uses the key of the communication initiating terminal to perform cryptography calculation on the information of the communication initiating terminal and generates a first verification value.

In an embodiment, when the communication initiating terminal performs cryptography calculation on the data message, the encryption key that the communication initiating terminal can obtain is only its own key, and the data message only carries the information of the communication initiating terminal. Therefore, when the communication initiating terminal performs cryptography calculation on the data message, the communication initiating terminal can only use the key of the communication initiating terminal to perform cryptography calculation or signature on the identity or address of the communication initiating terminal to generate the first verification value.

In an embodiment of the present application, the step of performing strong verification on the data message further includes: after adding the first verification value to the data message, the first transmission node performs an authenticity inspection on the communication initiating terminal. The authenticity inspection includes one or more of the following combinations: inspection based on access control, inspection based on a verification code, inspection based on cryptography, and inspection based on a token.

After receiving the data message, the first transmission node further performs an authenticity inspection on the communication initiating terminal to avoid forwarding the data message with security risks to the second transmission node.

In an embodiment of the present application, the step of performing strong verification on the data message further includes: the first transmission node, the second transmission node, or the communication receiving terminal verifies the first verification value carried by the data message.

The second transmission node is a transmission node that receives a data message sent from the previous transmission node. The previous transmission node is the first transmission node or the second transmission node. There may be multiple second transmission nodes between the first transmission node and the communication receiving terminal, and the second transmission node may be a router, a switch, and a gateway.

In an embodiment of the present application, when the first transmission node verifies the first verification value, first verification is performed on the first verification value by using the key of the communication initiating terminal and the information of the communication initiating terminal.

In an embodiment, when the communication initiating terminal performs cryptography calculation on the data message, the first transmission node uses the key of the communication initiating terminal and the information of the communication initiating terminal to perform the first verification on the first verification value.

In an embodiment of the present application, when the second transmission node verifies the first verification value, the first verification is performed on the first verification value by using the key of the first transmission node and the information of the communication initiating terminal and/or the first transmission node, or the first verification is performed on the first verification value by using the key of the communication initiating terminal and the information of the communication initiating terminal and/or the first transmission node. In an embodiment, when the first transmission node performs cryptography calculation on the data message and generates the first verification value, the first transmission node forwards the data message carrying the first verification value to the second data message, and the data message further carries information for obtaining the key of the communication initiating terminal or the first transmission node. Therefore, the second transmission node can use the key of the first transmission node and the information of the communication initiating terminal and/or the first transmission node to perform the first verification on the first verification value. Or the second transmission node can use the key of the communication initiating terminal and the information of the communication initiating terminal and/or the first transmission node to perform the first verification on the first verification value.

In an embodiment of the present application, when the communication receiving terminal verifies the first verification value, first verification is performed on the first verification value by using the key of the first transmission node and the information of the communication initiating terminal and/or the first transmission node, or first verification is performed on the first verification value by using the key of the communication initiating terminal and the information of the communication initiating terminal and/or the first transmission node.

In an embodiment, the communication initiating terminal performs cryptography calculation on the data message and generates the first verification value. After the first transmission node performs the first verification on the first verification value, the first transmission node transmits the data message carrying the verification value to the communication receiving terminal via the second transmission node. Therefore, when the first transmission node verifies the first verification value, the communication receiving terminal can further verify the first verification value again.

In another embodiment, after the first transmission node performs cryptography calculation on the data message and generates the first verification value, the second transmission node performs first verification on the first verification value, then the second transmission node transmits the data message carrying the first verification value to the communication receiving terminal. Therefore, when the second transmission node verifies the first verification value, the communication receiving terminal can further verify the first verification value again.

Cryptography calculation is performed on the information in the data message, which can avoid data leakage and security issues. In addition, the first verification value generated with encryption can be used for the second transmission node and the communication receiving terminal to detect the authenticity of the data message, thereby avoiding forwarding data messages with security risks and ensuring the security during the data message transmission process.

In an embodiment of the present application, the performing strong verification on the data message further includes: the first transmission node, the second transmission node or the communication receiving terminal generates verification information for the data message, and adds verification information to the data message. The verification information includes: a certificate, a verification code and a token. The certificate information is carried by the data message and can be stored in the outer IP header, the inner IP header, the IP address of the communication initiating terminal, the IP address of the communication receiving terminal, the option header, the original extension header or the newly defined extension header of the data message.

In an embodiment, when the first transmission node generates verification information for a data message, the first transmission node generates verification information of the first transmission node according to the IP of the communication initiating terminal and the IP of the communication receiving terminal.

In another embodiment, when the second transmission node generates verification information for the data message and the data message carries the IP of the communication receiving terminal appearing for the first time, the verification information of the second transmission node is generated according to the IP of the first transmission node and the IP of the communication receiving terminal. When the data message carries the IP of the communication receiving terminal appearing for the first time and the IP of the communication initiating terminal appearing for the first time, the second transmission node generates verification information of the second transmission node according to the IP of the communication initiating terminal and the IP of the communication receiving terminal.

In another embodiment, when the first transmission node generates verification information of the first transmission node, the second transmission node and the communication initiating terminal can generate verification information for the data message again according to the IP of the communication initiating terminal and the IP of the communication receiving terminal.

In an embodiment, when the second transmission node generates verification information of the second transmission node for the data message, the communication receiving terminal may further generate verification information of the communication receiving terminal according to the IP of the first transmission node and the IP of the communication receiving terminal in response to that the data message carries the IP of the communication receiving terminal appearing for the first time. Besides, the communication receiving terminal may further generate verification information of the communication receiving terminal according to the IP of the communication initiating terminal and the IP of the communication receiving terminal in response to that the data message carries the IP of the communication receiving terminal appearing for the first time and the IP of the communication initiating terminal appearing for the first time.

In addition, when there are multiple second transmission nodes between the communication receiving terminal and the first transmission node, in response to that the primary second transmission node completes the strong verification of the data message and passes the verification, the data message carrying verification information and the first verification value will be sent to the next second transmission node, so that the subsequent multiple second transmission nodes can perform the same strong verification step on the data message. After all the second transmission nodes complete the strong verification of the data message and pass the verification, the data message will be sent to the communication receiving terminal.

When two communication terminals transmit the data message for the first time, verification information is generated according to the IP information carried by the data message, so that the communication terminal can perform verification when performing the next communication transmission. That is, when the communication initiating terminal transmits the second data message to the communication terminal, each transmission node can perform weak verification on the second data message.

**In** an embodiment of the present application, after strong verification is performed on the data message, the verification information is screened according to the preset standard to obtain the authorization verification information. The authorization verification information is sent to the communication initiating terminal together with the response message of the communication initiating terminal.

**In** an embodiment, the second transmission node A, the second transmission node B and the second transmission node C respectively generate corresponding verification information a1, verification information a2 and verification information a3 for the data message. The data message carrying verification information a1, a2 and a3 is sent by the second transmission node C to the communication receiving terminal. The communication receiving terminal can screen verification information a1, a2 and a3 according to the authorization whitelist, and a1 and a2 are screened to obtain the authorization verification information a1 and a2. The communication receiving terminal transmits a response message carrying the authorization verification information to the communication initiating terminal.

**In** another embodiment, the second transmission node A, the second transmission node B and the second transmission node C generate corresponding verification information a1, verification information a2 and verification information a3 for the data message, respectively. The second transmission node C can screen verification information a1, verification information a2 and verification information a3 according to the resource occupancy. After screening verification information a1 and verification information a2, authorization verification information a1 and a2 are obtained. The second transmission node C adds the authorization verification information to the response message sent by the communication receiving terminal, and forwards the response message to the communication receiving terminal via multiple transmission nodes.

**In** another embodiment, the communication receiving terminal may not screen the generated verification information, and the communication receiving terminal directly authorize each generated verification information. The authorization verification information is added to the response message sent by the communication receiving terminal, and the response message is forwarded to the communication receiving terminal through multiple transmission nodes.

Embodiments of the present application do not limit the preset authorization standard of the authorization verification information. The specific authorization standard used in the above embodiments is to make the process of obtaining the authorization verification information clearer.

By screening the verification information, invalid verification information or information with security risks, which may affect the security of communication transmission and cause waste of resources, is prevented from being authorized.

Step 103, in response to that the data message is the second data message, performing weak verification on the data message.

The second data message is not the data message sent to the communication receiving terminal for the first time, indicating that strong verification has been performed on the data message when the data message is sent to the communication receiving terminal for the first time. Therefore, for the data message between the communication initiating terminal and the communication receiving terminal, on which strong verification has been performed, when the data message is transmitted again, the weak verification with security lower than the strong verification can be adopted.

**In** the embodiment of the present application, the step of performing weak verification on the data message includes: according to the IP information carried by the data message, adding the stored authorization verification information to the data message. The IP information carried by the data message includes: the IP of the communication receiving terminal and the IP of the communication initiating terminal.

After the strong verification is performed on the first data message of the communication receiving terminal, the authorization verification information will be sent to the communication initiating terminal or the first transmission node along with the response message. When the encryption step of the data message is performed by the communication initiating terminal, the authorization verification information will be sent to the communication initiating terminal and stored by the communication initiating terminal. When the encryption step of the data message is performed by the first transmission node, the authorization verification information will be sent to the first transmission node along with the response message. The first transmission node stores the authorization verification information and transmits a response message to the communication initiating terminal.

Therefore, after the communication initiating terminal or the first transmission node determines that the data message is the second data message, the authorization verification information corresponding to the IP of the communication receiving terminal can be obtained from the stored authorization verification information according to the IP of the communication receiving terminal of the data message, and the authorization verification information is added to the data message.

**In** the embodiment of the present application, the step of performing weak verification on the data message further includes: verifying the authorization verification information carried by the data message.

**In** an embodiment, when the verification information generated by the second transmission node for the data message is authorized, the second transmission node verifies the authorization verification information carried by the data message. The second transmission node verifies the authorization verification information carried by the data message according to the IP of the first transmission node and the IP of the communication receiving terminal in response to that the data message carries the IP of the communication receiving terminal that does not appear for the first time. The second transmission node verifies the authorization verification information carried by the data message according to the IP of the communication initiating terminal and the IP of the communication receiving terminal in response to that the data message carries the IP of the communication receiving terminal that does not appear for the first time and the IP of the communication initiating terminal that does not appear for the first time.

**In** an embodiment, when the verification information generated by the first transmission node for the data message is authorized, the first transmission node verifies the authorization verification information carried by the data message according to the IP of the communication initiating terminal and the IP of the communication receiving terminal.

**In** an embodiment, when the verification information generated by the communication receiving terminal for the data message is authorized, the communication receiving terminal verifies the authorization verification information carried by the data message according to the IP of the first transmission node and the IP of the communication receiving terminal. Or the authorization verification information carried by the data message is verified according to the IP of the communication initiating terminal and the IP of the communication receiving terminal.

**In** addition, when the verification information generated by the communication receiving terminal and the first transmission node or the second transmission node for the data message is authorized, the communication receiving terminal and the first transmission node or the second transmission node can verify the authorization verification information carried by the data message.

In an embodiment, after receiving a data message carrying authorization verification information, the second transmission node uses a cryptography algorithm to calculate the IP of the communication receiving terminal and the IP of the communication initiating terminal carried by the data message to obtain a calculated value. When the calculated value matches with the authorization verification information carried by the data message, it is considered that the verification of the authorization verification information is passed.

For the communication initiating terminal and the communication terminal that perform data transmission for the first time, it is necessary to adopt strong verification with high security to verify the data message transmitted by the communication initiating terminal. For the communication initiating terminal and the communication receiving terminal that have already undergone strong verification, when data transmission between the communication initiating terminal and the communication terminal is performed again, weak verification with security lower than strong verification can be adopted for verification, so as to avoid fully opening the business between the communication initiating terminal and the communication terminal after only one verification, thereby avoiding potential security risks. In addition, multiple second transmission nodes all verify the authorization verification information, so as to avoid the problem that when only one second transmission node performs verification, the verification function of the second transmission node fails and the data message with secure risks cannot be intercepted. The verification of the authorization verification information is used to check whether the source IP of the data message (namely, the IP of the communication initiating terminal) has changed, so as to avoid forwarding data messages of unknown origin, and realize systematic security protection from an end-to-end perspective.

Step 104, if the verification passes, the data message is sent to the communication receiving terminal.

In an embodiment, the second transmission node verifies the first verification value of the data message. If the verification passes, the second transmission node transmits the data message to the next second transmission node, or transmits the data message to the communication receiving terminal. If the verification of the first transmission node passes, the first transmission node transmits the data message to the second transmission node.

In an embodiment, the second transmission node verifies the authorization verification information carried by the data message. If the verification passes, the second transmission node transmits the data message to the next second transmission node, or transmits the data message to the communication receiving terminal. If the first transmission node verifies successfully, the first transmission node transmits the data message to the second transmission node.

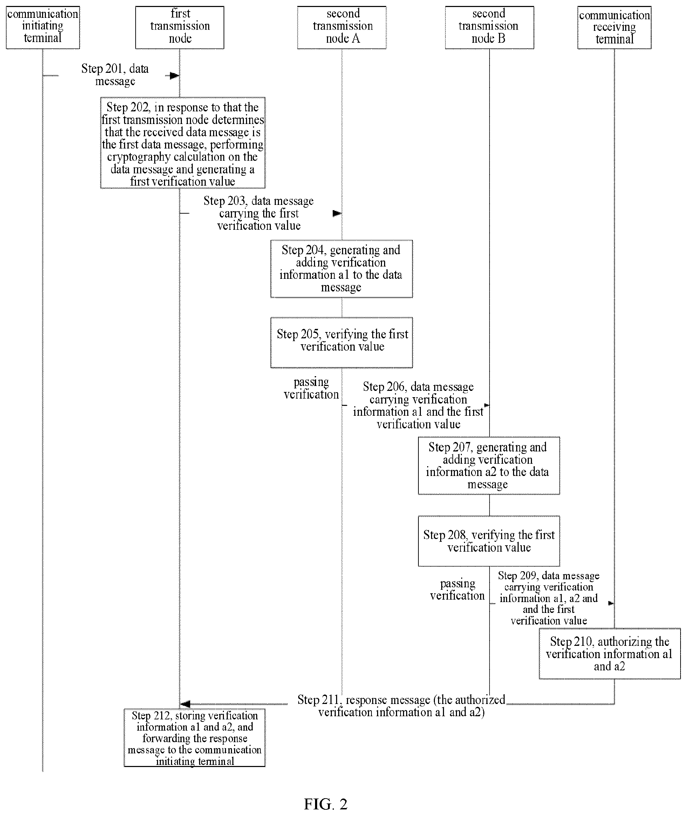

In order to make the communication protection method in the embodiments of the present application clearer, the process of the protection method is specifically described with reference to FIG. 2. The method in the embodiments of the present application is applied to the SRv6 scenario. When the data message is the first data message, the specific content of the protection process is as follows.

Step 201, the communication initiating terminal transmits the data message to the first transmission node.

Step 202, in response to that the first transmission node determines that the received data message is the first data message, the first transmission node performs cryptography calculation on the data message and generates a first verification value.

Step 203, the first transmission node forwards the data message carrying the first verification value to the second transmission node A.

Step 204, the second transmission node generates and adds verification information a1 to the data message.

Step 205, the second transmission node verifies the first verification value.

Step 206, if the verification is successful, the data message carrying verification information a1 and the first verification value is forwarded to the second transmission node B.

Step 207, the second transmission node B generates and adds verification information a2 to the data message.

Step 208, the second transmission node A verifies the first verification value.

Step 209, if the verification is successful, the data message carrying verification information a1 and a2 is forwarded to the communication receiving terminal.

Step 210, if verification information a1 and a2 meets the authorization standard, the communication receiving terminal authorizes the verification information a1 and a2.

Step 211, the communication receiving terminal transmits a response message carrying verification information a1 and a2 to the communication initiating terminal via the second transmission node B, the second transmission node A and the first transmission node.

Step 212, the first transmission node stores verification information a1 and a2, and forwards the response message to the communication initiating terminal.

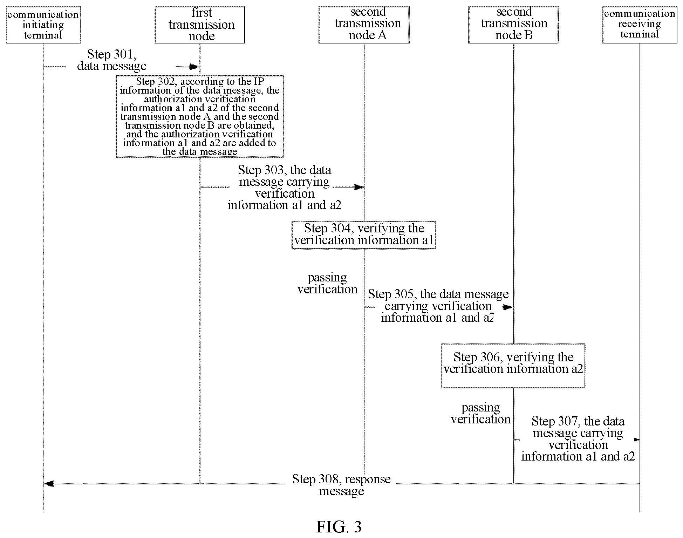

In order to make the communication protection method in the embodiments of the present application clearer, the process of the communication protection method is specifically described with reference to FIG. 3. The method in the embodiments of the present application is applied to the SRv6 scenario. When the data message is the second data message, the specific content of the protection process is as follows.

Step 301, the communication initiating terminal transmits a data message to the first transmission node.

Step 302, according to the IP information of the data message, the authorization verification information a1 and a2 of the second transmission node A and the second transmission node B are obtained, and the authorization verification information a1 and a2 are added to the data message.

Step 303, the first transmission node forwards the data message carrying verification information a1 and a2 to the second transmission node A.

Step 304, the second transmission node A verifies the verification information a1.

Step 305, if the verification is successful, the data message carrying the verification information a1 and a2 is forwarded to the second transmission node B.

Step 306, the second transmission node B verifies the verification information a2.

Step 307, if the verification is successful, the data message carrying the verification information a1 and a2 is forwarded to the communication receiving terminal.

Step 308, the communication receiving terminal transmits a response message to the communication initiating terminal.

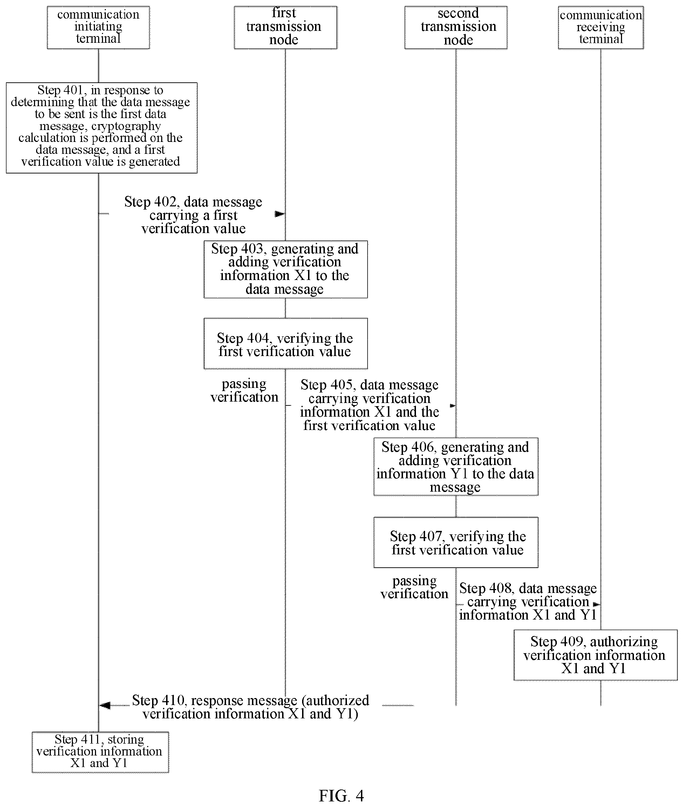

In order to make the communication protection method in the embodiments of the present application clearer, the process of the protection method is specifically described with reference to FIG. 4. When the data message is the first data message, the protection process can further include following specific contents.

Step 401, in response to that the communication initiating terminal determines that the data message to be sent is the first data message, cryptography calculation is performed on the data message, and a first verification value is generated.

Step 402, the communication initiating terminal forwards a data message carrying a first verification value to the first transmission node.

Step 403, the first transmission node generates and adds verification information X1 to the data message.

Step 404, the first transmission node verifies the first verification value.

Step 405, if the verification is successful, the data message carrying verification information X1 and the first verification value is forwarded to the second transmission node.

Step 406, the second transmission node generates and adds verification information Y1 to the data message.

Step 407, the second transmission node verifies the first verification value.

Step 408, if the verification is successful, the data message carrying verification information X1 and Y1 is forwarded to the communication receiving terminal.

Step 409, if verification information X1 and Y1 meet the authorization standard, the communication receiving terminal authorizes verification information X1 and Y1.

Step 410, the communication receiving terminal transmits a response message carrying verification information X1 and Y1 to the communication initiating terminal via the second transmission node and the first transmission node.

Step 411, the communication initiating terminal stores verification information X1 and Y1.

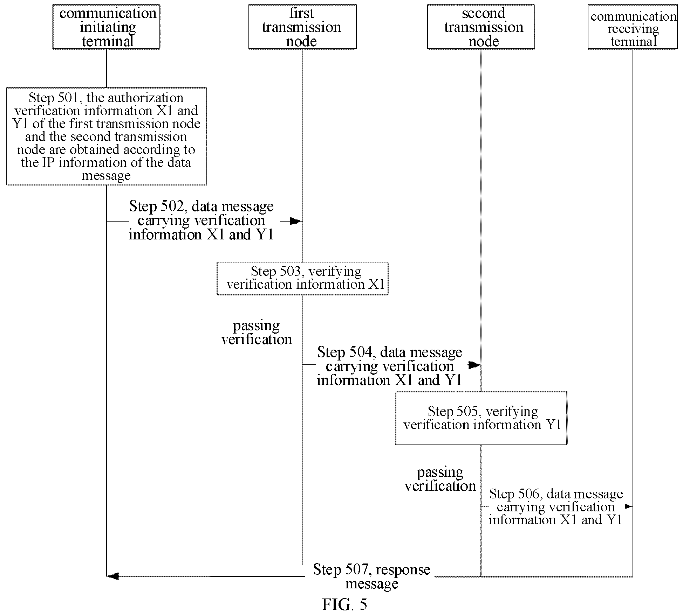

In order to make the protection method in the embodiments of the present application clearer, the process of the protection method is specifically described with reference to FIG. 5. When the data message is the second data message, the protection process can further include following specific contents.

Step 501, in response to that the communication initiating terminal determines that the data message to be sent is the second data message, the authorization verification information X1 and Y1 of the first transmission node and the second transmission node are obtained according to the IP information of the data message.

Step 502, the communication initiating terminal forwards the data message carrying verification information X1 and Y1 to the first transmission node.

Step 503, the first transmission node verifies verification information X1.

Step 504, if the verification is successful, the first transmission node forwards the data message carrying verification information X1 and Y1 to the second transmission node.

Step 505, the second transmission node verifies verification information Y1.

Step 506, if the verification is successful, the second transmission node forwards the data message carrying verification information X1 and Y1 to the communication receiving terminal.

Step 507, the communication receiving terminal transmits a response message to the communication initiating terminal.

For the communication protection method in the embodiments of the present application, strong verification is performed on the primary data message sent to the communication receiving terminal, and only if the strong verification passes, the data message is forwarded to the communication receiving terminal, so as to achieve security verification while establishing communication with the communication receiving terminal, thereby avoiding the communication receiving terminal from being attacked and ensuring the security and reliability of the network. In addition, weak verification is performed on the non-primary data message of the communication receiving terminal, so that even if the communication receiving terminal has been connected, weak verification still needs to be performed on the data message, thereby avoiding the potential risks brought by the data message. Therefore, the problems of low protection efficiency, poor defense system and insufficient protection of the service intercommunication process are solved, and the purpose of comprehensive and efficient protection of the communication intercommunication process is achieved. In addition, by performing cryptography calculation on the information in the data message, while avoiding security issues caused by data leakage, the first verification value generated by encryption can be used for the second transmission node and the communication receiving terminal to detect the authenticity of the data message, thereby avoiding forwarding data messages with security risks, ensuring the security of the data message transmission process. The verification for the authorization verification information is used to check whether the source IP of the data message (namely, the IP of the communication initiating terminal) has changed, thereby avoiding forwarding data messages of unknown origin, and achieving systematic security protection from an end-to-end perspective.

The steps of the above steps are divided only for clear description. When implementing, they can be combined into one step or some steps can be divided into multiple steps. As long as they include the same logical relationship, they are all fall within the scope of the present application. Adding insignificant modifications or introducing insignificant designs to the algorithm or process, but not changing the core design of its algorithm and process are all fall within the scope of the present application.

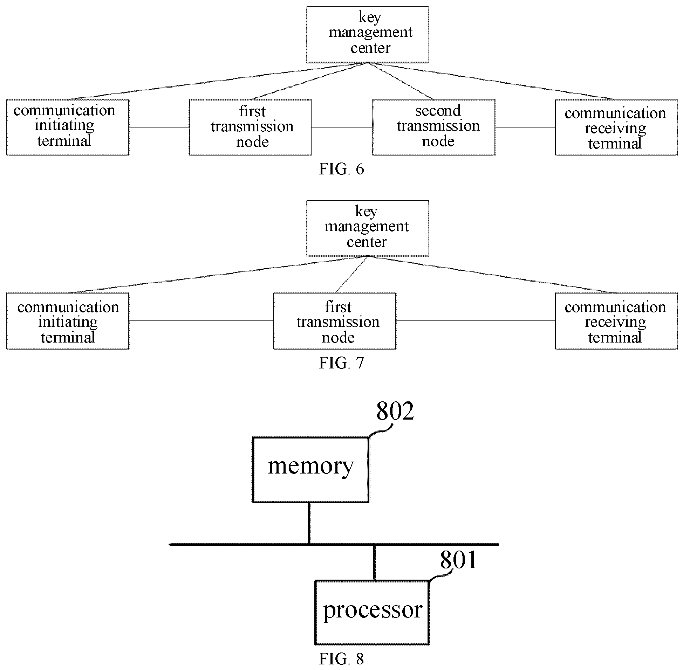

The embodiments of the present application provide a communication protection system, and the network architecture of the protection system is shown in FIG. 6, which specifically includes a communication initiating terminal, a communication receiving terminal, a first transmission node, and at least one second transmission node.

The communication initiating terminal is used to transmit a data message to the communication receiving terminal, and receive a data message from the communication receiving terminal.

The communication receiving terminal is used to receive a data message from the communication initiating terminal, authorize the communication initiating terminal, and transmit verification information to the communication initiating terminal. In an embodiment, verification information is added to the first data message, and verification information carried by the second data message is verified.

The first transmission node is used to determine whether the data message is the first data message or the second data message, perform cryptography calculation on the first data message, and add authorization verification information to the second data message. In an embodiment, the first transmission node can further perform an authenticity inspection on the communication initiating terminal.

The second transmission node generates and adds verification information for the first data message, and verifies the authorization verification information carried by the second data message.

The communication protection system in the embodiments of the present application can further include a key management center for managing the key information of the communication initiating terminal and the first transmission node.

The embodiment of the present application further provides a protection system, and the network architecture of the protection system is shown in FIG. 7, which specifically includes a communication initiating terminal, a communication receiving terminal, and a first transmission node.

The communication initiating terminal is used to determine whether the data message is the first data message or the second data message, perform cryptography calculation on the first data message, add authorization verification information to the second data message, and receive the data message from the communicati/on receiving terminal.

The communication receiving terminal is used to receive the data message from the communication initiating terminal, authorize the communication initiating terminal, and transmit verification information to the communication initiating terminal. In an embodiment, verification information is added to the first data message, and verification information carried by the second data message is verified.

The first transmission node generates and adds verification information to the first data message, and verifies the authorization verification information carried by the second data message.

The communication protection system in the embodiments of the present application may further include a key management center and at least one second transmission node. The key management center is used to manage the key information of the communication initiating terminal, and the second transmission node is used to receive the data message from the previous transmission node, perform cryptography calculation on the first data message, add authorization verification information to the second data message. Further, the second transmission node may authorize the communication initiating terminal.

The modules in the above-mentioned embodiments of the present application are all logical modules. In practical applications, a logical unit may be a physical unit, or a part of a physical unit, and may further be implemented as a combination of multiple physical units. In addition, in order to highlight the innovative part of the present application, the present implementation does not introduce units that are not closely related to solving the technical problems proposed by the present application, but this does not mean that there are no other units in the present implementation.

The embodiments of the present application further provide an electronic device, as shown in FIG. 8, which includes at least one processor 801, and a memory 802 communicating with the at least one processor 801. The memory 802 stores data executable by the at least one processor 801. When the instructions are executed by the at least one processor 801, the at least one processor 801 can execute the communication protection method.

The memory is connected to the processor by a bus which may include any number of interconnected buses and bridges. The bus connects one or more processors and various circuits of the memory together. The bus can further connect various other circuits, such as peripherals, voltage regulators, and power management circuits, which are well known in the art and will not be repeated herein. The bus interface provides an interface between the bus and the transceiver. The transceiver can be one element or a plurality of elements, such as a plurality of receivers and transmitters, providing a unit configured to communicate with various other devices on a transmission medium. The data processed by the processor is transmitted on a wireless medium via an antenna, and further, the antenna further receives the data and transmits the data to the processor.

The processor is configured for managing the bus and general processing, and can further provide various functions, such as timing, peripheral interfaces, voltage regulation, power management, and other control functions. The memory can be used to store data used by the processor when performing steps.

The above-mentioned product can execute the method in the embodiments of the present application, and has the corresponding functional modules and beneficial effects of the execution method. For technical details not described in detail in the present embodiment, the method in the embodiments of the present application may be referred to.

Another embodiment of the present application relates to a computer-readable storage medium, which stores a computer program. When the computer program is executed by the processor, the above method embodiments are implemented.

Those skilled in the art can understand that all or part of the steps in the above method can be completed by instructing the hardware related to the program. The program is stored in a storage medium, and includes several instructions to enable a device (which can be a single-chip microcomputer, chip, and the like) or a processor to perform all or part of the steps of the method described in each embodiment of the present application. The aforementioned storage medium includes: the U disk, the mobile hard disk, the read-only memory (ROM), the random access memory (RAM), the disk or the optical disk, and the like.

The above embodiments are provided to those skilled in the art to implement and use the technical solutions of the present application. Those skilled in the art may make various modifications or changes to the above embodiments without departing from the inventive concept of the present application. Therefore, the scope of the present application is not limited to the above embodiments, but should conform to the maximum scope of the innovative features mentioned in the claims.

## Claims

1. A communication protection method, applied to a communication protection system comprising a communication initiating terminal, a communication receiving terminal, a first transmission node and a second transmission node, wherein the communication protection method comprises:
(101), determining a type of a data message to be sent, wherein the type of the data message comprises a first data message and a second data message; the first data message is a primary data message sent to the communication receiving terminal, and the second data message is a non-primary data message sent to the communication receiving terminal;
(102), in response to that the data message is the first data message, performing strong verification on the data message;
(103), in response to that the data message is the second data message, performing weak verification on the data message, wherein the strong verification is a verification with security higher than the weak verification;
(104), in response to that verification passes, transmitting the data message to the communication receiving terminal;
**characterized in that**, the determining the type of the data message comprises:
in response to that the data message carries an Internet Protocol, IP, of the communication receiving terminal appearing for a first time, determining the data message as the first data message;
in response to that the data message carries the IP of the communication receiving terminal not appearing for a first time, determining the data message as the second data message.

2. The communication protection method according to claim 1, wherein:
the communication protection method is applied to the first transmission node or the communication initiating terminal;
the performing the strong verification on the data message comprises:
performing cryptography calculation on the data message and generating a first verification value, and adding the first verification value to the data message;
the performing the weak verification on the data message comprises:
adding stored authorization verification information to the data message according to Internet Protocol, **IP,** information carried by the data message.

3. The communication protection method according to claim 2, wherein the performing the cryptography calculation on the data message and generating the first verification value comprises:
in response to that the communication protection method is applied to the first transmission node, performing cryptography calculation on information of the communication initiating terminal and/or the first transmission node by using a key of the first transmission node, and generating the first verification value, or performing cryptography calculation on information of the communication initiating terminal and/or the first transmission node by using a key of the communication initiating terminal, and generating the first verification value; and
in response to that the communication protection method is applied to the communication initiating terminal, performing cryptography calculation on the information of the communication initiating terminal by using the key of the communication initiating terminal, and generating the first verification value.

4. The communication protection method according to claim 2, wherein after the adding the first verification value to the data message, the communication protection method further comprises:
in response to that the communication protection method is applied to the first transmission node, performing authenticity inspection on the communication initiating terminal, wherein the authenticity inspection comprises one or more of following combinations: inspection based on access control, inspection based on a verification code, inspection based on cryptography, and inspection based on a token.

5. The communication protection method according to claim 2, wherein after the transmitting the data message to the communication receiving terminal, the communication protection method further comprises:
receiving a response message returned from the communication receiving terminal, wherein the response message carries the authorization verification information;
storing the authorization verification information.

6. The communication protection method according to claim 2, wherein:
the communication protection method is applied to the first transmission node or the second transmission node or the communication receiving terminal;
the performing the strong verification on the data message comprises:
verifying the first verification value carried by the data message;
generating verification information for the data message, and adding the verification information to the data message;
the performing the weak verification on the data message comprises:
verifying the authorization verification information carried by the data message.

7. The communication protection method according to claim 6, wherein the verifying the first verification value carried by the data message comprises:
in response to that the communication protection method is applied to the first transmission node, performing first verification on the first verification value by using the key of the communication initiating terminal and the information of the communication initiating terminal;
in response to that the communication protection method is applied to the second transmission node, performing first verification on the first verification value by using the key of the first transmission node and the information of the communication initiating terminal and/or the first transmission node, or performing first verification on the first verification value by using the key of the communication initiating terminal and the information of the communication initiating terminal and/or the first transmission node;
in response to that the communication protection method is applied to the communication receiving terminal, performing first verification on the first verification value by using the key of the first transmission node and the information of the communication initiating terminal and/or the first transmission node, or performing first verification on the first verification value by using the key of the communication initiating terminal and the information of the communication initiating terminal and/or the first transmission node.

8. The communication protection method according to claim 6, wherein the generating the verification information for the data message comprises:
in response to that the communication protection method is applied to the second transmission node, and in response to that the data message carries an IP of the communication receiving terminal appearing for a first time, generating the verification information according to an IP of the first transmission node and the IP of the communication receiving terminal; in response to that the data message carries an IP of the communication receiving terminal appearing for a first time and an IP of the communication initiating terminal appearing for a first time, generating the verification information according to the IP of the communication initiating terminal and the IP of the communication receiving terminal;
in response to that the communication protection method is applied to the first transmission node, generating the verification information according to the IP of the communication initiating terminal and the IP of the communication receiving terminal;
in response to that the communication protection method is applied to the communication receiving terminal, generating the verification information according to the IP of the first transmission node and the IP of the communication receiving terminal, or generating the verification information according to the IP of the communication initiating terminal and the IP of the communication receiving terminal.

9. The communication protection method according to claim 6, wherein the verifying the authorization verification information carried by the data message comprises:
in response to that the communication protection method is applied to the second transmission node, and in response to that the data message carries the IP of the communication receiving terminal not appearing for a first time, verifying the authorization verification information carried by the data message according to the IP of the first transmission node and the IP of the communication receiving terminal; in response to that the data message carries the IP of the communication receiving terminal not appearing for a first time and the IP of the communication initiating terminal not appearing for a first time, verifying the authorization verification information carried by the data message according to the IP of the communication initiating terminal and the IP of the communication receiving terminal;
in response to that the communication protection method is applied to the first transmission node, verifying the authorization verification information carried by the data message according to the IP of the communication initiating terminal and the IP of the communication receiving terminal;
in response to that the communication protection method is applied to the communication receiving terminal, verifying the authorization verification information carried by the data message according to the IP of the first transmission node and the IP of the communication receiving terminal, or verifying the authorization verification information carried by the data message according to the IP of the communication initiating terminal and the IP of the communication receiving terminal.

10. The communication protection method according to claim 6, wherein after the performing the strong verification on the data message, the communication protection method further comprises:
screening the verification information according to a preset authorization standard to obtain the authorization verification information, wherein the authorization verification information and the response message of the communication initiating terminal are sent to the communication initiating terminal.

11. A communication protection system, **characterized by** comprising: a communication initiating terminal, a communication receiving terminal, a first transmission node and at least one second transmission node;
wherein the first transmission node is configured to execute the communication protection method according to any one of claims 2 to 5; and
the second transmission node and the communication receiving terminal are configured to execute the communication protection method according to any one of claims 6 to 10.

12. An electronic device, **characterized by** comprising:
at least one processor (801); and
a memory (802) communicating with the at least one processor (801);
wherein the memory (802) stores an instruction executable by the at least one processor (801), and the instruction is executed by the at least one processor (801) to make the at least one processor (801) execute the communication protection method according to any one of claims 1 to 10.

13. A computer-readable storage medium, **characterized by** storing a computer program, wherein when the computer program is executed by a processor, the communication protection method according to any one of claims 1 to 10 is implemented.

## Patentansprüche

1. Kommunikationsschutzverfahren, das auf ein Kommunikationsschutzsystem angewendet wird, das ein Kommunikationsinitiierungsendgerät, ein Kommunikationsempfangsendgerät, einen ersten Übertragungsknoten und einen zweiten Übertragungsknoten umfasst, wobei das Kommunikationsschutzverfahren umfasst:
(101) Bestimmen eines Typs einer zu sendenden Datennachricht, wobei der Typ der Datennachricht eine erste Datennachricht und eine zweite Datennachricht umfasst;
wobei die erste Datennachricht eine primäre Datennachricht ist, die an das Kommunikationsempfangsendgerät gesendet wird, und die zweite Datennachricht eine nicht primäre Datennachricht ist, die an das Kommunikationsempfangsendgerät gesendet wird;
(102) als Reaktion darauf, dass die Datennachricht die erste Datennachricht ist, Durchführen einer starken Verifizierung der Datennachricht;
(103) als Reaktion darauf, dass die Datennachricht die zweite Datennachricht ist, Durchführen einer schwachen Verifizierung der Datennachricht, wobei die starke Verifizierung eine Verifizierung mit einem höheren Sicherheitsniveau als die schwache Verifizierung ist;
(104) als Reaktion darauf, dass die Verifizierung erfolgreich ist, Übertragen der Datennachricht an das Kommunikationsempfangsendgerät;
**dadurch gekennzeichnet, dass** das Bestimmen des Typs der Datennachricht umfasst:
als Reaktion darauf, dass die Datennachricht ein Internetprotokoll (IP) des Kommunikationsempfangsendgeräts mitführt, das erstmals auftritt, Bestimmen der Datennachricht als die erste Datennachricht;
als Reaktion darauf, dass die Datennachricht das IP des Kommunikationsempfangsendgeräts mitführt, das nicht zum ersten Mal auftritt, Bestimmen der Datennachricht als die zweite Datennachricht.

2. Kommunikationsschutzverfahren nach Anspruch 1, wobei:
das Kommunikationsschutzverfahren auf den ersten Übertragungsknoten oder das Kommunikationsinitiierungsendgerät angewendet wird;
das Durchführen der starken Verifizierung der Datennachricht umfasst:
Durchführen einer kryptographischen Berechnung an der Datennachricht und Erzeugen eines ersten Verifizierungswerts sowie Hinzufügen des ersten Verifizierungswerts zu der Datennachricht;
das Durchführen der schwachen Verifizierung der Datennachricht umfasst:
Hinzufügen gespeicherter Autorisierungsverifizierungsinformationen zu der Datennachricht gemäß den in der Datennachricht mitgeführten Internetprotokollinformationen (IP-Informationen).

3. Kommunikationsschutzverfahren nach Anspruch 2, wobei das Durchführen der kryptographischen Berechnung an der Datennachricht und das Erzeugen des ersten Verifizierungswerts umfasst:
als Reaktion darauf, dass das Kommunikationsschutzverfahren auf den ersten Übertragungsknoten angewendet wird, Durchführen einer kryptographischen Berechnung an Informationen des Kommunikationsinitiierungsendgeräts und/oder des ersten Übertragungsknotens unter Verwendung eines Schlüssels des ersten Übertragungsknotens und Erzeugen des ersten Verifizierungswerts, oder Durchführen einer kryptographischen Berechnung an Informationen des Kommunikationsinitiierungsendgeräts und/oder des ersten Übertragungsknotens unter Verwendung eines Schlüssels des Kommunikationsinitiierungsendgeräts und Erzeugen des ersten Verifizierungswerts; und
als Reaktion darauf, dass das Kommunikationsschutzverfahren auf das Kommunikationsinitiierungsendgerät angewendet wird, Durchführen einer kryptographischen Berechnung an den Informationen des Kommunikationsinitiierungsendgeräts unter Verwendung des Schlüssels des Kommunikationsinitiierungsendgeräts und Erzeugen des ersten Verifizierungswerts.

4. Kommunikationsschutzverfahren nach Anspruch 2, wobei das Kommunikationsschutzverfahren nach dem Hinzufügen des ersten Verifizierungswerts zu der Datennachricht ferner umfasst:
als Reaktion darauf, dass das Kommunikationsschutzverfahren auf den ersten Übertragungsknoten angewendet wird, Durchführen einer Authentizitätsprüfung des Kommunikationsinitiierungsendgeräts, wobei die Authentizitätsprüfung eine oder mehrere Kombinationen aus den folgenden Prüfungen umfasst: eine auf einer Zugriffskontrolle basierende Prüfung, eine auf einem Verifizierungscode basierende Prüfung, eine auf Kryptographie basierende Prüfung und eine auf einem Token basierende Prüfung.

5. Kommunikationsschutzverfahren nach Anspruch 2, wobei das Kommunikationsschutzverfahren nach dem Übertragen der Datennachricht an das Kommunikationsempfangsendgerät ferner umfasst:
Empfangen einer von dem Kommunikationsempfangsendgerät zurückgesendeten Antwortnachricht, wobei die Antwortnachricht die Autorisierungsverifizierungsinformationen mitführt;
Speichern der Autorisierungsverifizierungsinformationen.

6. Kommunikationsschutzverfahren nach Anspruch 2, wobei:
das Kommunikationsschutzverfahren auf den ersten Übertragungsknoten oder den zweiten Übertragungsknoten oder das Kommunikationsempfangsendgerät angewendet wird;
das Durchführen der starken Verifizierung der Datennachricht umfasst:
Verifizieren des in der Datennachricht mitgeführten ersten Verifizierungswerts;
Erzeugen von Verifizierungsinformationen für die Datennachricht und Hinzufügen der Verifizierungsinformationen zu der Datennachricht;
das Durchführen der schwachen Verifizierung der Datennachricht umfasst:
Verifizieren der in der Datennachricht mitgeführten Autorisierungsverifizierungsinformationen.

7. Kommunikationsschutzverfahren nach Anspruch 6, wobei das Verifizieren des in der Datennachricht mitgeführten ersten Verifizierungswerts umfasst:
als Reaktion darauf, dass das Kommunikationsschutzverfahren auf den ersten Übertragungsknoten angewendet wird, Durchführen einer ersten Verifizierung des ersten Verifizierungswerts unter Verwendung des Schlüssels des Kommunikationsinitiierungsendgeräts und der Informationen des Kommunikationsinitiierungsendgeräts;
als Reaktion darauf, dass das Kommunikationsschutzverfahren auf den zweiten Übertragungsknoten angewendet wird, Durchführen einer ersten Verifizierung des ersten Verifizierungswerts unter Verwendung des Schlüssels des ersten Übertragungsknotens und der Informationen des Kommunikationsinitiierungsendgeräts und/oder des ersten Übertragungsknotens, oder Durchführen einer ersten Verifizierung des ersten Verifizierungswerts unter Verwendung des Schlüssels des Kommunikationsinitiierungsendgeräts und der Informationen des Kommunikationsinitiierungsendgeräts und/oder des ersten Übertragungsknotens;
als Reaktion darauf, dass das Kommunikationsschutzverfahren auf das Kommunikationsempfangsendgerät angewendet wird, Durchführen einer ersten Verifizierung des ersten Verifizierungswerts unter Verwendung des Schlüssels des ersten Übertragungsknotens und der Informationen des Kommunikationsinitiierungsendgeräts und/oder des ersten Übertragungsknotens, oder Durchführen einer ersten Verifizierung des ersten Verifizierungswerts unter Verwendung des Schlüssels des Kommunikationsinitiierungsendgeräts und der Informationen des Kommunikationsinitiierungsendgeräts und/oder des ersten Übertragungsknotens.

8. Kommunikationsschutzverfahren nach Anspruch 6, wobei das Erzeugen der Verifizierungsinformationen für die Datennachricht umfasst:
als Reaktion darauf, dass das Kommunikationsschutzverfahren auf den zweiten Übertragungsknoten angewendet wird, und als Reaktion darauf, dass die Datennachricht ein IP des Kommunikationsempfangsendgeräts mitführt, das erstmals auftritt, Erzeugen der Verifizierungsinformationen gemäß einem IP des ersten Übertragungsknotens und dem IP des Kommunikationsempfangsendgeräts;
als Reaktion darauf, dass die Datennachricht ein IP des Kommunikationsempfangsendgeräts, das erstmals auftritt, und ein IP des Kommunikationsinitiierungsendgeräts, das erstmals auftritt, mitführt, Erzeugen der Verifizierungsinformationen gemäß dem IP des Kommunikationsinitiierungsendgeräts und dem IP des Kommunikationsempfangsendgeräts;
als Reaktion darauf, dass das Kommunikationsschutzverfahren auf den ersten Übertragungsknoten angewendet wird, Erzeugen der Verifizierungsinformationen gemäß dem IP des Kommunikationsinitiierungsendgeräts und dem IP des Kommunikationsempfangsendgeräts;
als Reaktion darauf, dass das Kommunikationsschutzverfahren auf das Kommunikationsempfangsendgerät angewendet wird, Erzeugen der Verifizierungsinformationen gemäß dem IP des ersten Übertragungsknotens und dem IP des Kommunikationsempfangsendgeräts, oder Erzeugen der Verifizierungsinformationen gemäß dem IP des Kommunikationsinitiierungsendgeräts und dem IP des Kommunikationsempfangsendgeräts.

9. Kommunikationsschutzverfahren nach Anspruch 6, wobei das Verifizieren der in der Datennachricht mitgeführten Autorisierungsverifizierungsinformationen umfasst:
als Reaktion darauf, dass das Kommunikationsschutzverfahren auf den zweiten Übertragungsknoten angewendet wird, und als Reaktion darauf, dass die Datennachricht das IP des Kommunikationsempfangsendgeräts mitführt, das nicht zum ersten Mal auftritt, Verifizieren der in der Datennachricht mitgeführten Autorisierungsverifizierungsinformationen gemäß dem IP des ersten Übertragungsknotens und dem IP des Kommunikationsempfangsendgeräts;
als Reaktion darauf, dass die Datennachricht das IP des Kommunikationsempfangsendgeräts, das nicht zum ersten Mal auftritt, und das IP des Kommunikationsinitiierungsendgeräts, das nicht zum ersten Mal auftritt, mitführt, Verifizieren der in der Datennachricht mitgeführten Autorisierungsverifizierungsinformationen gemäß dem IP des Kommunikationsinitiierungsendgeräts und dem IP des Kommunikationsempfangsendgeräts;
als Reaktion darauf, dass das Kommunikationsschutzverfahren auf den ersten Übertragungsknoten angewendet wird, Verifizieren der in der Datennachricht mitgeführten Autorisierungsverifizierungsinformationen gemäß dem IP des Kommunikationsinitiierungsendgeräts und dem IP des Kommunikationsempfangsendgeräts;
als Reaktion darauf, dass das Kommunikationsschutzverfahren auf das Kommunikationsempfangsendgerät angewendet wird, Verifizieren der in der Datennachricht mitgeführten Autorisierungsverifizierungsinformationen gemäß dem IP des ersten Übertragungsknotens und dem IP des Kommunikationsempfangsendgeräts, oder Verifizieren der in der Datennachricht mitgeführten Autorisierungsverifizierungsinformationen gemäß dem IP des Kommunikationsinitiierungsendgeräts und dem IP des Kommunikationsempfangsendgeräts.

10. Kommunikationsschutzverfahren nach Anspruch 6, wobei das Kommunikationsschutzverfahren nach dem Durchführen der starken Verifizierung der Datennachricht ferner umfasst:
Filtern der Verifizierungsinformationen gemäß einem vorgegebenen Autorisierungsstandard, um die Autorisierungsverifizierungsinformationen zu erhalten, wobei die Autorisierungsverifizierungsinformationen und die Antwortnachricht des Kommunikationsinitiierungsendgeräts an das Kommunikationsinitiierungsendgerät gesendet werden.

11. Kommunikationsschutzsystem, **dadurch gekennzeichnet, dass** es ein Kommunikationsinitiierungsendgerät, ein Kommunikationsempfangsendgerät, einen ersten Übertragungsknoten und mindestens einen zweiten Übertragungsknoten umfasst;
wobei der erste Übertragungsknoten dazu eingerichtet ist, das Kommunikationsschutzverfahren nach einem der Ansprüche 2 bis 5 auszuführen; und
der zweite Übertragungsknoten und das Kommunikationsempfangsendgerät dazu eingerichtet sind, das Kommunikationsschutzverfahren nach einem der Ansprüche 6 bis 10 auszuführen.

12. Elektronische Vorrichtung, **dadurch gekennzeichnet, dass** sie umfasst:
mindestens einen Prozessor (801); und
einen Speicher (802), der mit dem mindestens einen Prozessor (801) in Kommunikationsverbindung steht;
wobei der Speicher (802) eine durch den mindestens einen Prozessor (801) ausführbare Anweisung speichert und die Anweisung von dem mindestens einen Prozessor (801) ausgeführt wird, um zu bewirken, dass der mindestens eine Prozessor (801) das Kommunikationsschutzverfahren nach einem der Ansprüche 1 bis 10 ausführt.

13. Computerlesbares Speichermedium, **dadurch gekennzeichnet, dass** darauf ein Computerprogramm gespeichert ist, wobei, wenn das Computerprogramm von einem Prozessor ausgeführt wird, das Kommunikationsschutzverfahren nach einem der Ansprüche 1 bis 10 implementiert wird.

## Revendications

1. Procédé de protection de communication, appliqué à un système de protection de communication comprenant un terminal initiateur de communication, un terminal récepteur de communication, un premier nœud de transmission et un second nœud de transmission, dans lequel le procédé de protection de communication comprend :
(101) déterminer un type d'un message de données à envoyer, le type de message de données comprenant un premier message de données et un second message de données ; le premier message de données étant un message de données principal envoyé au terminal récepteur de communication, et le second message de données est un message de données non principal envoyé au terminal récepteur de communication ;
(102) en réponse à ce que le message de données est le premier message de données, exécuter une vérification forte sur le message de données ;
(103) en réponse à ce que le message de données est le second message de données, exécuter une vérification légère sur le message de données, la vérification forte étant une vérification avec une sécurité supérieure à celle de la vérification légère ;
(104) en réponse à ce que la vérification est réussie, transmettre le message de données au terminal récepteur de communication ;
**caractérisé en ce que**, la détermination du type du message de données comprend :
en réponse à ce que le message de données porte un protocole Internet, IP, du terminal récepteur de communication apparaissant pour la première fois, déterminer le message de données comme le premier message de données ; et
en réponse à ce que le message de données porte un protocole Internet, IP, du terminal récepteur de communication non apparaissant pour la première fois, déterminer le message de données comme le second message de données.

2. Procédé de protection de communication selon la revendication 1, dans lequel :
le procédé de protection de communication est appliqué au premier nœud de transmission ou au terminal initiateur de communication ;
l'exécution de la vérification forte sur le message de données comprend :
exécuter des calculs cryptographiques sur le message de données et générer une première valeur de vérification, puis ajouter la première valeur de vérification au message de données ;
l'exécution de la vérification légère sur le message de données comprend :
ajouter des informations de vérification d'autorisation stockées au message de données selon le protocole Internet, IP, et les informations portées par le message de données.

3. Procédé de protection de communication selon la revendication 2, dans lequel l'exécution des calculs cryptographiques sur le message de données et génération de la première valeur de vérification comprend :
en réponse à ce que le procédé de protection de communication est appliqué au premier nœud de transmission, exécuter des calculs cryptographiques sur des informations du terminal initiateur de communication et/ou du premier nœud de transmission en utilisant une clé du premier nœud de transmission, et générer la première valeur de vérification, ou exécuter des calculs cryptographiques sur des informations du terminal initiateur de communication et/ou du premier nœud de transmission en utilisant une clé du terminal initiateur de communication, et générer la première valeur de vérification ; et
en réponse à ce que le procédé de protection de communication est appliqué au terminal initiateur de communication, exécuter des calculs cryptographiques sur les informations du terminal initiateur de communication en utilisant la clé du terminal initiateur de communication, et générer la première valeur de vérification.

4. Procédé de protection de communication selon la revendication 2, dans lequel après l'ajout de la première valeur de vérification au message de données, le procédé de protection de communication comprend en outre :
en réponse à ce que le procédé de protection de communication est appliqué au premier nœud de transmission, exécuter une inspection d'authenticité sur le terminal initiateur de communication,
l'inspection d'authenticité comprenant une ou plusieurs des combinaisons suivantes : une inspection basée sur un contrôle d'accès, une inspection basée sur un code de vérification, une inspection basée sur une cryptographie et une inspection basée sur un jeton.

5. Procédé de protection de communication selon la revendication 2, dans lequel après la transmission du message de données au terminal récepteur de communication, le procédé de protection de communication comprend en outre :
recevoir un message de réponse renvoyé depuis le terminal récepteur de communication, le message de réponse portant les informations de vérification d'autorisation ; et
stocker les informations de vérification d'autorisation.

6. Procédé de protection de communication selon la revendication 2, dans lequel :
le procédé de protection de communication est appliqué au premier nœud de transmission ou au second nœud de transmission ou au terminal récepteur de communication ;
l'exécution de la vérification forte sur le message de données comprend :
vérifier la première valeur de vérification portée par le message de données ;
générer des informations de vérification pour le message de données, et ajouter les informations de vérification au message de données ;
l'exécution de la vérification légère sur le message de données comprend :
vérifier les informations de vérification d'autorisation portées par le message de données.

7. Procédé de protection de communication selon la revendication 6, dans lequel la vérification de la première valeur de vérification portée par le message de données comprend :
en réponse à ce que le procédé de protection de communication est appliqué au premier nœud de transmission, exécuter une première vérification sur la première valeur de vérification en utilisant la clé du terminal initiateur de communication et les informations du terminal initiateur de communication ;
en réponse à ce que le procédé de protection de communication est appliqué au second nœud de transmission, exécuter une première vérification sur la première valeur de vérification en utilisant la clé du premier nœud de transmission et les informations du terminal initiateur de communication et/ou du premier nœud de transmission, ou exécuter une première vérification sur la première valeur de vérification en utilisant la clé du terminal initiateur de communication et les informations du terminal initiateur de communication et/ou du premier nœud de transmission ;
en réponse à ce que le procédé de protection de communication est appliqué au terminal récepteur de communication, exécuter une première vérification sur la première valeur de vérification en utilisant la clé du premier nœud de transmission et les informations du terminal initiateur de communication et/ou du premier nœud de transmission, ou exécuter une première vérification sur la première valeur de vérification en utilisant la clé du terminal initiateur de communication et les informations du terminal initiateur de communication et/ou du premier nœud de transmission.

8. Procédé de protection de communication selon la revendication 6, dans lequel la génération des informations de vérification pour le message de données comprend :
en réponse à ce que le procédé de protection de communication est appliqué au second nœud de transmission, et en réponse ce que le message de données porte un IP du terminal récepteur de communication apparaissant pour la première fois, générer les informations de vérification selon un IP du premier nœud de transmission et l'IP du terminal récepteur de communication ; en réponse à ce que le message de données porte un IP du terminal récepteur de communication apparaissant pour la première fois et un IP du terminal initiateur de communication apparaissant pour la première fois, générer les informations de vérification selon l'IP du terminal initiateur de communication et l'IP du terminal récepteur de communication ;
en réponse à ce que le procédé de protection de communication est appliqué au premier nœud de transmission, générer les informations de vérification selon l'IP du terminal initiateur de communication et l'IP du terminal récepteur de communication ;
en réponse à ce que le procédé de protection de communication est appliqué au terminal récepteur de communication, générer les informations de vérification selon l'IP du premier nœud de transmission et l'IP du terminal récepteur de communication, ou générer les informations de vérification selon l'IP du terminal initiateur de communication et l'IP du terminal récepteur de communication.

9. Procédé de protection de communication selon la revendication 6, dans lequel la vérification des informations de vérification d'autorisation portées par le message de données. comprend :
en réponse à ce que le procédé de protection de communication est appliqué au second nœud de transmission, et en réponse à ce que le message de données porte l'IP du terminal récepteur de communication n'apparaissant pas pour la première fois, vérifier les informations de vérification d'autorisation portées par le message de données selon l'IP du premier nœud de transmission et
l'IP du terminal récepteur de communication ; en réponse à ce que le message de données porte l'IP du terminal récepteur de communication n'apparaissant pas pour la première fois et l'IP du terminal initiateur de communication n'apparaissant pas pour la première fois, vérifier les informations de vérification d'autorisation portées par le message de données selon l'IP du terminal initiateur de communication et l'IP du terminal récepteur de communication ;
en réponse à ce que le procédé de protection de communication est appliqué au premier nœud de transmission, vérifier les informations de vérification d'autorisation portées par le message de données selon l'IP du terminal initiateur de communication et l'IP du terminal récepteur de communication ;
en réponse à ce que le procédé de protection de communication est appliqué au terminal récepteur de communication, vérifier les informations de vérification d'autorisation protées par le message de données selon l'IP du premier nœud de transmission et l'IP du terminal récepteur de communication, ou vérifier les informations de vérification d'autorisation protées par le message de données selon l'IP du terminal initiateur de communication et l'IP du terminal récepteur de communication.

10. Procédé de protection de communication selon la revendication 6, dans lequel, après l'exécution de la vérification forte sur le message de données, le procédé de protection de communication comprend en outre :
filtrer les informations de vérification selon une norme d'autorisation prédéfinie pour obtenir les informations de vérification d'autorisation, les informations de vérification d'autorisation et le message de réponse du terminal initiateur de communication étant envoyés au terminal initiateur la communication.

11. Système de protection de communication, **caractérisé en ce qu'**il comprend un terminal initiateur de communication, un terminal récepteur de communication, un premier nœud de transmission et au moins un second nœud de transmission ;
dans lequel le premier nœud de transmission est configuré pour mettre en œuvre le procédé de protection de communication selon l'une quelconque des revendications 2 à 5 ; et
dans lequel le second nœud de transmission et le terminal récepteur de communication sont configurés pour mettre en œuvre le procédé de protection de communication selon l'une quelconque des revendications 6 à 10.

12. Dispositif électronique, **caractérisé en ce qu'**il comprend :
au moins un processeur (801) ; et
une mémoire (802) en communication avec le ou les processeurs (801) ;
dans lequel la mémoire (802) stocke une instruction exécutable par le ou les processeurs (801), et l'instruction est exécutée par le ou les processeurs (801), pour amener le ou les processeurs (801) à mettre en œuvre le procédé de protection de communication selon l'une quelconque des revendications 1 à 10.

13. Support de stockage lisible par ordinateur, **caractérisé en ce qu'**il stocke un programme informatique, dans lequel lorsque le programme informatique est exécuté par un processeur, le procédé de protection de communication selon l'une quelconque des revendications 1 à 10 est mis en œuvre.
